Europäisches Patentamt

European Patent Office

Office européen des brevets

(19)

(11) Veröffentlichungsnummer: **0 259 491**
**B1**

(12) # EUROPÄISCHE PATENTSCHRIFT

(45) Veröffentlichungstag der Patentschrift: **23.01.91**

(51) Int. Cl.⁵: **B 23 K 31/02, H 01 F 7/20**

(21) Anmeldenummer: **86902575.9**

(22) Anmeldetag: **24.01.86**

(86) Internationale Anmeldenummer:
**PCT/SU86/00004**

(87) Internationale Veröffentlichungsnummer:
**WO 87/04380 30.07.87 Gazette 87/17**

(54) HERSTELLUNGSVERFAHREN EINES ADAPTERS FÜR EINE MEHRPOLIGE MAGNETISCHE PLATTE EINER METALLVERARBEITUNGSMASCHINE.

(43) Veröffentlichungstag der Anmeldung:
**16.03.88 Patentblatt 88/11**

(45) Bekanntmachung des Hinweises auf die
Patenterteilung:
**23.01.91 Patentblatt 91/04**

(84) Benannte Vertragsstaaten:
**AT CH DE FR GB IT LI NL**

(56) Entgegenhaltungen:
**SU-A- 487 725**
**SU-A- 757 273**
**US-A-2 435 737**
**US-A-2 882 458**
**US-A-2 966 738**
**US-A-3 854 711**

(73) Patentinhaber: **INSTITUT ELEKTROSVARKI
IMENI E.O.PATONA AKADEMII NAUK
UKRAINSKOI SSR
ul. Bozhenko, 11
Kiev, 252650 (SU)**

(72) Erfinder: **PUZRIN, Leonid Gustavovich
ul. Lomonosova, 27-45
Kiev, 252124 (SU)**
Erfinder: **ATROSHENKO, Miron Grigorievich
ul. Yakira, 21-12
Kiev, 252119 (SU)**
Erfinder: **YAREMENKO, Vladimir Leontievich
ul. Moskovskaya, 5-18
Kiev, 252010 (SU)**
Erfinder: **VERNIKOV, Arkady Yakovlevich
ul. Filatova, 17-28
Odessa, 270080 (SU)**
Erfinder: **MENAKER, Pavel Semenovich
ul. Malinovskogo, 61-2-16
Odessa, 270074 (SU)**
Erfinder: **BOCHAROV, Nikolai Fedorovich
ul. Tolstogo, 28-74
Lipetsk, 398001 (SU)**
Erfinder: **KRYLOV, Nikolai Pavlovich
ul. Tereshkovoi, 16-53
Lipetsk, 398043 (SU)**

EP 0 259 491 B1

Courier Press, Leamington Spa, England.

**EP 0 259 491 B1**

(74) Vertreter: Ebbinghaus, Dieter et al
v. FÜNER, EBBINGHAUS, FINCK Patentanwälte
European Patent Attorneys Mariahilfplatz 2 & 3
D-8000 München 90 (DE)

## Beschriebung

Die vorliegende Erfindung bezieht sich auf magnetische Ausrüstungen und betrifft ein Verfahren zur Herstellung eines Adapters für mehrpolige Magnetspannplatten von Metallbearbeitungsmaschinen.

Bisheriger Stand der Technik

Eine Magnetspannplatte im ganzen enthält einen Kraftblock, der im Inneren eines Gehäuses untergebracht ist, das von oben durch einen Adapter verschlossen wird, dessen Vorderfläche für das Aufliegen und Festhalten der auf der betreffenden Maschine zu bearbeitenden Werkstücke dient.

Es ist ein Verfahren zur Herstellung eines rechteckigen Adapters für mehrpolige Magnetspannplatten von Metallbearbeitungsmaschinen bekannt, der eine rechteckige Platte darstellt, die aus Stahlplatten mit besonderen magnetischen Eigenschaften und Messingplatten, die einander abwechseln, besteht. Dieses Verfahren beinhaltet die Montage eines Pakets der genannten Platten, die Ausführung von Querschlitzen auf der der Arbeitsfläche gegenüberliegenden Fläche des Pakets und das darauffolgende Vergießen der Schlitze mit flüssigem Messing. Im folgenden Stadium dieses Verfahrens werden an dem Seiten- und Stirnflächen des Pakets Laschen aus Stahl mit besonderen magnetischen Eigenschaften und aus Messing befestigt, die dem Adapter eine zusätzliche Starrheit verleihen und zu dessen Befestigung am Gehäuse der Magnetspannplatte dienen (siehe US—A—2435737, Klasse 335—285).

Die nach diesem Verfahren hergestellten Adapter besitzen keine ausreichende Festigkeit, da die Befestigung der sich abwechselnden Platten aneinander durch Vergießen der Querschlitze mit Messing keine zuverlässige Verbindung der Platten auf ihrer ganzen Fläche gewahrleistet. Das lokale Erhitzen beim Vergießen der Schlitze führt zu einem Verwerfen der Platten, wodurch die Zwischenräume zwischen den Platten nur teilweise vergossen werden. Aus diesem Grund werden die Adapter zum Zwecke der Erzielung einer zusätzlichen Festigkeit grundsätzlich mit den erwähnten Seitenlaschen und mit die Laschen verbindenden Stäben versehen, für deren Anbringung im Plattenpaket entsprechende durchgehende Öffnungen ausgeführt werden. Außerdem ist die Realisierung des bekannten Verfahrens mit erheblichen Arbeitsaufwand für die Herstellung der Laschen und Befestigungselemente, das Vergießen des Plattenpakets und das darauffolgende Verbinden des Plattenpakets mit den Laschen verbunden.

Es ist auch ein Verfahren zur Herstellung eines in seinem Aufbau ähnlichen, mehrschichtigen Adapters bekannt, das in einem speziellen Ofen durchgeführt wird, der mit einer Vorrichtung zur Montage eines Pakets der sich abwechselnden Platten und zum Zusammenpressen des Pakets beim Löten ausgerüstet ist. Dieses Verfahren wird folgendermaßen durchgeführt: Zuerst erfolgt die Montage des Pakets der sich abwechselnden Platten, die aus Stahl mit besonderen magnetischen Eigenschaften und Messing bestehen, wobei jede Stahl- und Messingplatte durch eine Hartlotfolie auf Silber-Kupfer-Grundlage abgetrennt wird. Dann erfolgt das Erhitzen des Pakets bis auf eine Temperatur, die etwas höher ist als die Schmelztemperatur des Lots. Während des Erhitzens werden die Platten zusammengedrückt, damit der Zwischenraum zwischen den aus einem magnetischen und einem unmagnetischen (Messing) Werkstoff bestehenden Platten vollkommen mit Lot ausgefüllt wird. Nach dem Abkühlen holt man den entstandenen Adapter aus dem Ofen heraus und nimmt die darauffolgende mechanische Bearbeitung vor (siehe US—A—2882458, Klasse 317—163).

Die Anwendung des beschriebenen Verfahrens erfordert den Einsatz von teurem und in beschränkten Mengen zur Verfügung stehendem Hartlot auf Silber-Kupfer-Grundlage sowie die Verwendung spezieller Ausrüstungen. Außerdem erfolgt die Montage des Plattenpakets unter Bedingungen, die die Arbeit der bei der Montage beschäftigten Arbeiter erschweren. Der dabei hergestellte Adapter besitzt keine ausreichend hohe Festigkeit, da ungelötete Stellen auftreten können, was sich besonders ungünstig auswirkt, wenn sie in der Nähe der Arbeitsfläche auftreten.

Desweiteren ist aus US—A—3854711 ein magnetischen Adapter mit aus nostfreiem Stahl hergestellten unmagnetischen Platten bekannt.

Offenbarung der Erfindung

Der vorliegenden Erfindung liegt die Aufgabe zugrunde, ein Verfahren zur Herstellung eines Adapters für mehrpolige Magnetspannplatten von Metallbearbeitungsmaschinen zu schaffen, bei dem das Löten unter Bedingungen vorgenommen wird, die eine hohe Festigkeit des Adapters bei geringerem Arbeits- und Materialaufwand gewährleisten.

Diese Aufgabe wird bei der Herstellung eines Adapters für mehrpolige Magnetspannplatten von Metallbearbeitungsmaschinen durch ein Verfahren gelöst, das die Montage eines Pakets sich abwechselnder Platten aus Stahl mit besonderen magnetischen Eigenschaften und einem unmagnetischen Werkstoff und Lot, das Erhitzen des entstandenen Pakets bis auf eine Temperatur, bei der die Lötung vorgenommen werden kann, dessen anschließende Abkülung und die mechanische Bearbeitung der Oberflächen des hergestellten Adapters beinhaltet und bei dem gemäß der Erfindung als Platten aus einem unmagnetischen Werkstoff Platten aus rostfreiem Stahl verwendet werden, die Montage der sich abwechselnden Platten und des Lots gleichzeitig mit der Montage eines die Platten fest von allen Seiten umgebenden, dünnwandigen Stahlbehälters vorgenommen wird, der vor dem erwähnten Erhitzen hermetisch verschlossen wird, und nach dem Abkühlen dieses Behälters mit dem aus den Platten und dem Lot bestehenden Paket die an die Ränder der Platten anliegenden Wände des Behälters entfernt werden.

Durch das erfindungsgemäß Verfahren ist es möglich, einen Adapter herzustellen, der eine höhere Festigkeit besitzt als der bekannte Adapter bei geringerem Arbeits- und Materialaufwand.

Gemäß der vorliegenden Erfindung ist es zweckmäßig, daß das Lot in Form eines Metallblechs verwendet wird, das der Arbeitsfläche des Adapters entspricht und das an den Stirnseiten der Platten des Pakets angebracht wird.

Bei Beachtung dieser Bedingung geschieht das Löten mit höchstmöglicher Vollständigkeit und der Adapter erreicht eine höhere Festigkeit.

Beste Ausführungsvariante der Erfindung

Das in der vorliegenden Erfindung angebotene Verfahren zur Herstellung eines Adapters für mehrpolige Magnetspannplatten von Metallbearbeitungsmaschinen ermöglicht es, Adapter herzustellen, die aus sich abwechselnden Platten zusammengesetzt werden, die aus 1) Stahl mit besonderen magnetischen Eigenschaften, z.B., niedriggekohltem Stahl, und 2) rostfreiem Stahl, der, wie bekannt, ein unmagnetischer Werkstoff ist, bestehen.

Gemäß der vorliegenden Erfindung werden gleichzeitig montiert:

a) das Paket der sich abwechselnden Platten aus den oben genannten Werkstoffen und dem Lot, das in der Regel in Form eines Metallblechs ausgeführt wird. Das Lot bringt man an dem fertig montierten, aus einem magnetischen und unmagnetischen Werkstoff bestehenden Plattenpaket derart en, daß es die Stirnflächen der das Paket bildenden Platten bedeckt. Dabei ist es zweckmäßig, daß das Lot die am weitesten ausgedehnten Stirnflächen der Platten bedeckt. Als Lötmetall können gemäß der vorliegenden Erfindung z.B. Kupfer oder Kupferlegierungen verwendet werden.

In der Regel beträgt die Dicke der Stahlplatten mit besonderen magentischen Eigenschaften 3 bis 5 mm und die Dikke der aus einem unmagnetischen Werkstoff bestehenden Platten—1 bis 2 mm.

Ein Paket enthält etwa 200 sich abwechselnder, aus einem magnetischen und einem unmagnetischen Werkstoff bestehender Platten, die Anzahl der zur Herstellung eines Pakets verwendeten Platten kann jedoch in weiten Grenzen variieren und wird in Abhängigkeit von der gewünschten Arbeitsfläche und anderen Kennwerten des Adapters festgelegt.

b) ein dünnwandiger Strahbehälter, der fest von allen Seiten das aus den Platten und dem Lot bestehende Paket umgibt.

Die Montage des Stahlbehälters, des Lots und des Plattenpakets geschieht folgendermaßen. Das Plattenpaket wird auf dem Boden des Behälters montiert, wobei die Platten so angeordnet werden, daß die Stirnflächen der Platten, vorzugsweise die längsten, auf den Boden des zukünftigen Behälters aufstoßen und somit einen Adapter mit längsgerichteten Platten bilden.

An den Boden des Behälters wird dicht unter einem Winkel von 90° eine seiner Seitenwände angeschweißt, an die abwechselnd dicht aneinander auf die bereits beschriebene weise die Platten aus rostfreiem und unlegiertem Stahl gelegt werden. Dicht an die letzte Platte legt man die zweite Seitenwand des Behälters an, die über das entstandene Plattenpaket fest an die erste Seitenwand angedrückt und dicht an den Boden des Behälters angeschweißt wird. An den Boden des Behälters und die Seitenwände werden dann unter einem Winkel von 90° dicht die Stirnwände angeschweißt. Das Paket wird von oben mit einem Blech bedeckt, das aus dem gleichen Werkstoff wie das Lot besteht, und an die vier Wände des Behälters wird dicht ein Deckel angeschweißt.

Die Erfindung sieht die Herstellung eines Adapters nicht nur mit längsgerichteten, sondern auch mit quergerichteten Platten vor. Dabei wird an den Boden des Behälters zuerst eine Stirnwand angeschweißt und dann werden die Platten in Querrichtung (relativ zum Behälterboden) gelegt und durch die zweite Stirnwand zusammengepreßt. Außerdem braucht der Behälter nicht aus sechs Einzelteilen bestehen wie in der obigen Beschreibung, sondern er kann z.B. aus einem entsprechend zugeschnittenen Stück, dessen Teile umgebogen und im Verlauf der Montage verschweißt werden, bestehen.

Der entstandene Behälter wird hermetisch verschlossen und in einem gewöhnlichen Wärmeofen bis auf die Löttemperatur erhitzt.

Beim Erhitzen entsteht in den kleinen Zwischenräumen und Lücken im Innern des Behälters ein Vakuum durch Auflösen der atmosphärischen Gase in dem Werkstoff, aus dem die Platten und Wände des Behälters bestehen. Durch die Entstehung des Vakuums werden die zum Löten vorgesehenen Oberflächen der Platten von den Rückständen der Oxydhaut und nichtmetallischen Einschlüssen gereinigt, wodurch es zu einer festen Verbindung mit dem geschmolzenen Lot kommt, das praktisch alle Zwischenräume zwischen den Platten ausfüllt. Zu einem Ausfüllen aller Zwischenräume mit dem Lötstoff trägt auch der Umstand bei, daß durch den Druck der im Ofen herrschenden Atmosphäre der Behälter zusammengedrückt wird und der verhältnismäßig nachgiebige Deckel das geschmolzene Lot in die Zwischenräume zwischen den Platten drückt.

Der Effekt der Reinigung der zu lötenden Flächen wird in erheblichem Maß durch die Verwendung unmagnetischer Platten aus rostfreiem Stahl, erzielt, die beim Erhitzen auf hohe Temperaturen intensiv atmosphärische Gase absorbieren.

Nach dem Abkühlen werden z.B. durch mechanische Bearbeitung der Deckel, der Boden und die Seitenwände des Behälters entfernt, und der auf diese Weise entstandene Adapter wird einer Nachbehandlung unterworfen.

Der so hergestellte Adapter besitzt eine hohe Festigkeit, da die aus einem magnetischen und einem unmagnetischen Werkstoff bestehenden Platten infolge aller der Vorteile, die das Löten im Vakuum bietet, zuverlässig untereinander verlötet sind. Die Herstellungskosten der Adapter sind gering, da das erfindungsgemäße Verfahren einfach in der Durchführung ist, keine spezielle Ausrüstung erfordert und verhältnismäßig billige, für hohe Temperaturen vorgesehene Lötmetalle verwendet werden können.

Industrielle Anwendbarkeit

Die Erfindung wird im Werkzeugmaschinenbau bei der Produktion von Metallbearbeitungsmaschinen verwendet, wo die zu bearbeitenden Werkstücke, vor allem kleinformatige Teile und Werkstücke aus ferromagnetischen Werkstoffen, bei verschiedenartiger mechanischer Bearbeitung mit Hilfe von Magnetspannplatten festgehalten werden.

Patentansprüche

1. Verfahren zur Herstellung eines Adapters für mehrpolige Magnetspannplatten von Metallbearbeitungsmaschinen, das die Montage eines Pakets sich abwechselnder Platten aus Stahl mit besonderen magnetischen Eigenschaften und einem unmagnetischen Werkstoff und Lot, daß Erhitzen des entstandenen Pakets bis auf eine Temperatur, bei der die Lötung vorgenommen werden kann, dessen anschließende Abkühlung und die mechanische Bearbeitung der Oberflächen des hergestellten Adapters beinhaltet, dadurch gekennzeichnet, daß als Platten aus einem unmagnetischen Werkstoff Platten aus rostfreiem Stahl verwendet werden, die Montage der sich abwechselnden Platten und des Lots gleichzeitig mit der Montage eines die Platten fest von allen Seiten umgebenden, dünnwandigen Stahlbehälters vorgenommen wird, der vor dem erwähnten Erhitzen hermetisch verschlossen wird, und nach dem Abkühlen dieses Behälters mit dem aus den Platten und dem Lot bestehenden Paket die an die Ränder der Platten anliegenden Wände des Behälters entfernt werden.

2. Verfahren nach Anspruch 1, dadurch gekennzeichnet, daß das Lot in Form eines Metallblechs verwendet wird, das der Arbeitsfläche des Adapters entspricht und das an den Stirnseiten der Platten des Pakets angebracht wird.

Revendications

1. Procédé de fabrication d'un adaptateur d'un plateau magnétique à plusieurs pôles d'une machine-outil pour usinage des métaux consistant à assembler les plaques en acier magnétique et amagnétique et matière de brasure s'alternant entre elles en un paquet, chauffer ce paquet assemblé jusqu'à la température qui assure le brasage, le refroidir ultérieurement et à usiner la surface de l'adaptateur ainsi obtenu, caractérisé en ce qu'on utilise les plaques en acier inoxydable en tant que les plaques en matériau amagnétique, en ce qu'on assemble les plaques s'alternant entre elles et la matière de brasure en assemblant simultanément un conteneur à paroi mince en acier qui les emboîte intimement de tous les côtés, en ce qu'on étanchéifie ce contement avant le chauffage et en ce qu'on enlève les parois du conteneur qui se joignent aux bords des plaques après le refroidissement dudit conteneur avec le paquet de plaques.

2. Procédé selon la revendication 1, caractérisé en ce qu'on utilise la matière de brasure en forme d'une tôle métallique correspondant à la surface active de l'adaptateur, qu'on pose sur les faces en bout des plaques du paquet.

Claims

1. A method of manufacturing the adapter of a multiple magnetic slab of a metal-working machine tool, comprising the steps of assembling a stack of alternating plates made of magnetic steel and of a non-magnetic material, and solder, heating the stack thus produced to a temperature sufficient for soldering, and subsequently cooling the stack and machining the surfaces of the adapter thus obtained, characterized in that the plates on the non-magnetic material are plates of stainless steel, the assembling of the alternating plates and solder being conducted simultaneously with the assembling of a thin-wall steel container snugly enclosing the stacked plates from all sides, this container being sealed prior to the heating step, and the walls of the container adjoining the edges of the plates being removed after the cooling of the container with the stacked plates and solder therein.

2. A method according to Claim 1, characterized in that the solder used is in the form of a metal sheet corresponding to the working surface of the adapter, positioned at the exposed ends of the plates in the stack.